# EUROPEAN PATENT SPECIFICATION

(11) **EP 1 135 020 B1**
(45) Date of publication and mention of the grant of the patent: **28.01.2004**
(21) Application number: 99959513.5
(22) Date of filing: 26.11.1999
(51) Int. Cl.: A01K 51/00

(54) **FOULBROOD TREATMENTS**
BEHANDLUNGEN VON DER FOULBROODBIENENKRANKHEIT
TRAITEMENT CONTRE LA LOQUE

(30) Priority: 26.11.1998 GB 9825839
(43) Date of publication of application: 26.09.2001
(73) Proprietor: UC3 University College Cardiff Consultants Ltd., Cardiff CF1 3XR (GB)
(72) Inventor: PRINCE, Stuart Neil, Cardiff School of, Cardiff CF10 3TL (GB); DANCER, Brian Norman, Cardiff School of, Cardiff CF10 3TL (GB)
(74) Representative: Hutchins, Michael Richard
(86) International application number: PCT/GB1999/003932
(87) International publication number: WO 2000/030435

(56) References cited:
- DE-A- 19 706 598
- US-A- 3 954 969
- DATABASE WPI Week 9241 Derwent Publications Ltd., London, GB; AN 1992-339125 XP002130288 & SU 1 692 441 A (MELNIK), 23 November 1991 (1991-11-23)
- OKAYAMA: "Microbiological searche for effective antimicrobes and desinfectants to Paenibacillus larvae." JOURNAL OF VETERINARY PHARMACOLOGY AND THERAPEUTICS, vol. 20, no. 1, 1997, pages 214-215, XP000878936

## Description

The present invention relates to the methods and compositions for the remedial treatment and prevention of disease in honey bees. In particular, the present invention relates to methods and compositions for the biological control of foulbrood in honey bees.

### Background to the invention

Honey bees (genus *Apis),* and in particular the European honey bee (*Apis mellifera*) and the eastern honey bee (*Apis cerana*), have long been exploited by man as a source of honey. *A. mellifera* and *A. cerana* store large amounts of accessible honey and can be induced to nest in moveable containers (or "hives"). These species have therefore been exploited throughout the world for thousands of years, and now form the basis of a large and sophisticated apiculture industry. As used herein, the term *honey bee* (or *bee)* refers to true honey bees of the genus *Apis,* and particularly to *A. mellifera* and *A. cerana*.

Bee-keeping (apiculture) is complicated by the fact that honey bees are subject to a wide variety of diseases. These diseases include those caused by viruses, bacteria, fungi, microspora, protozoa, parasitic mites, other insects and nematodes. Two bacterial diseases are cosmopolitan and cause widespread concern to apiculturalists and agricultural regulators: these are *American foulbrood* and *European foulbrood* (generically referred to as *foulbrood*).

American foulbrood (AFB) is a disease affecting bee larvae which almost always kills them at the propupae stage; the larvae turn brown, putrefy and give off an objectionable fish-glue-like smell. It is caused by the spore-forming, Gram-positive bacillus, *Paenibacillus larvae* subsp. *larvae.* The spores can remain dormant for decades in unused, contaminated bee-keeping equipment but cause disease when the equipment is reused or used by visiting bees from infected colonies. The bacillus infects the brood orally and liberates stable proteolytic enzymes when it sporulates causing death and ultimate dissolution of the larvae to the gluey colloid.

European foulbrood (EFB) is a disease caused by the non-spore forming, Gram-positive bacterium, *Melissococcus pluton*. This bacterium causes sporadic outbreaks of EFB that cause death of the brood without the glue-like colloid.

There are several methods presently available for treating both AFB and EFB, although there are inherent disadvantages associated with each. Perhaps the most efficient, albeit radical, form of treatment involves controlled burning of the honeybee colony and associated equipment. Such a destructive measure would not be a preferred method of treatment for obvious economical reasons if an alternative choice was available.

The shaking of adult bees from diseased colonies onto new combs has often been tried but the method is both unreliable and laborious.

Another method of treatment includes sterilisation of hives and their contents using sterilising chemicals such as formalin, chlorine and ethylene oxide. However, the use of such chemicals may render the honey and pollen in the combs permanently toxic to bees or cause the combs to become brittle. In addition the use of such chemicals to treat AFB and EFB is of variable efficiency.

An alternative form of treatment involves the use of antibiotics to treat diseased colonies. The AFB forming bacterium can be controlled by the antibiotic, oxytetracycline, usually in the trade formulation *Terramycin.* However, in the UK, under the terms of the Bee Diseases Order (1982), confirmed outbreaks of AFB must be treated by burning. This policy, enforced for decades, has ensured a low incidence of the AFB in the UK whereas in some countries, such as the USA and Australia, widespread use of prophylactic treatments of tetracycline is associated with a subclinical spread of the disease that engenders dependence on the antibiotic and may give rise to the emergence of tetracycline-resistant *Paenibacillus larvae* subsp. *larvae* (which would produce a disastrous collapse of honeybees colonies). In addition, antibiotics have no effect on the spores that contaminate combs and equipment and its use can lead to the spread of infection between colonies and so to an increasing dependence on regular application.

In the UK, mild cases of EFB are treatable with tetracycline, while severe and repeat outbreaks are controlled by burning. The use of tetracycline for prophylaxis or to treat acute cases of EFB is undesirable because of the dangers of emergent resistance and the likelihood dependence.

Another major problem associated with the use of tetracycline to treat AFB and EFB is the resultant appearance of undesirable tetracycline residues in honey, the appearance of such residues being counter to the health-giving and wholesome image that honey advocates seek to present.

US. 3,954,696 discloses a method of inoculating honeycomb with a liquid suspension containing living spores of the mould Penicillium waksmani Zaleski.

Thus, there remains a pressing need to develop a treatment for honey bee diseases in general, and for American and European foulbrood in particular, that avoids the problems associated with the use of tetracycline and the attendant financial costs of destruction by burning.

### Summary of the invention

It has now been discovered that certain bacterial microorganisms can prevent infection by bee pathogens as well as eradicate established infections in diseased bee colonies. The microorganisms may produce one or more antibiotic(s) or may compete with the bee pathogen(s), so preventing or eradicating infection. Some of the microorganisms may be naturally found in hives and honeybees.

Thus, for the first time it has been recognised that bee disease may be easily, safely and efficiently biologically controlled, so avoiding the problems associated with the use of antibiotic preparations and the attendant financial costs of destruction by burning.

Thus, according to the present invention there is provided a composition for the remedial treatment or prophylaxis of bee disease, the composition comprising an inoculum comprising one or more bacterial microorganisms and an apicultural delivery vehicle for delivering the inoculum to a hive such that a remedial and/or protective microflora is established therein.

In another aspect, the invention relates to a method for me remedial treatment or prophylaxis of bee disease comprising inoculating a hive with the above-mentioned composition to establish a remedial and/or protective microflora therein.

Further, preferable features of the invention are mentioned in the accompanying dependent claims.

The term *inoculum* is used herein in its usual sense to define a preparation containing microorganisms capable of establishing a microflora after inoculation. Thus, in the present

The term *inoculum* is used herein in its usual sense to define a preparation containing microorganisms capable of establishing a microflora after inoculation. Thus, in the present invention the inoculum comprises one or more live microorganisms in sufficient numbers and in a metabolic/physical state such that they can establish a microflora after delivery to a hive or bee colony.

The term *antibiotic* is used herein to cover any substance (for example, a bacteriocin or secondary metabolite) capable of suppressing the pathogenic activity of one or more bee pathogens (for example by suppressing their growth).

As used herein, the term *hive* is used to define any of the wide variety of containers used by beekeepers to contain and manage the honey bee colony and the honey it produces. Thus, the term is used herein to refer *inter alia to* the lid, box, frames, combs (the orderly wax matrices constructed by the bees within the frames) or any other hive component, either singly or collectively.

The hive may or may not contain a bee colony. For example, in circumstances where the invention is applied for prophylactic purposes, it is possible to deliver the inoculum to an empty hive. In such embodiments, the inoculum may lie dormant until it is dispersed and its growth promoted through the agency of colonizing bees: here, the protective microflora develops with the bee colony. Alternatively, the microflora may be (at least partially) developed in the absence of bee colonization by promoting growth of the inoculated microorganisms within the hive by any suitable technique (e.g. the provision of suitable nutrients and/or substrates). Thus, the remedial and/or protective microflora may be established with or without the agency of a colonizing bee population.

Any suitable apicultural delivery vehicle may be used in the invention so long as it is suitable for delivering the inoculum to a hive such that a remedial and/or protective microflora can ultimately be established therein (with or without the agency of a colonizing bee population). Preferably, the delivery vehicle is one which functions in conjunction with the foraging and feeding activity of the nesting bee colony, the inoculum being delivered when the inoculum (carried by the delivery agent) is taken up by the bees and subsequently dispersed throughout the hive and/or colony by subsequent secretion (e.g. *via* the hypopharyngeal glands in the course the feeding of larvae), excretion or discharge.

The inoculum may be delivered as a single dose, or in several smaller doses administered at intervals. Depending on the delivery vehicle, the inoculum may be delivered to any component of the hive (e.g. the unoccupied combs), or to the bee cluster itself (for example by taking a scoop of bees and spraying them with the inoculum away from the hive and subsequently returning them to it).

The size of the inoculum, the appropriate dosing regimen and the type of delivery vehicle will vary having regard *inter alia* to the nutritional status of the bee colony, the microorganism to be delivered, the mode of treatment (prophylactic or therapeutic/remedial), the age of the bee colony, the size and structure of the hive, geographical, climatic and seasonal conditions, the nature of the disease to be remedied or prevented and the severity of infection. Those skilled in the art will readily be able to determine the optimum parameters by routine trial and error.

A variety of different apicultural delivery vehicles are known for use in feeding overwintering bees and to deliver known antibiotics. Preferred according to the invention are apiculture patties, syrups, drenches, dustings or pastes.

The term *apiculture patty* is a term of art used to define any of a wide variety of solid tablets or cakes comprised primarily of solid sugar. Particularly preferred for use in the invention are sucrose patties or extender patties comprising a mixture of sucrose and fat (e.g. vegetable fat).

The syrups for use in the invention preferably comprise sugar and water. Particularly preferred are 50 % w/v sucrose solutions.

The dustings preferably comprise powdered sugar. They may be applied directly to the combs, but may also be applied (e.g. with bellows) more generally to all interior surfaces of the hive or directly to the bee cluster.

The paste for use in the invention may be a pollen substitute. The term *pollen substitute* is a term of art which defines any of a large number of formulations which are functionally and/or chemically mimetic of pollen (which is used as the principal protein source by the bees).

The sugar for use in the delivery vehicles of the invention is preferably sucrose, but any formulation which is functionally and/or chemically mimetic of nectar (which is used as the principal source of non-proteinaceous food by bees) may be employed.

The inoculum for use in the invention comprises one or more microorganism(s). The microorganism(s) may prevent infection by bee pathogens as well as eradicate established infections in diseased bee colonies (for example by producing one or more antibiotic(s) or by competing with the bee pathogen(s), so preventing or eradicating infection). Some of the microorganisms may be naturally found in hives and honeybees.

Where the microorganim(s) produce one or more antibiotic(s) active against one or more bee pathogen(s), the antibiotic(s) are preferably active against *Melissococcus pluton* and/or *Paenibacillus larvae* subsp. *larvae.* Preferred are antibiotic(s) active against both *Melissococcus pluton* and *Paenibacillus larvae* subsp. *larvae.* The antibiotics may be bacteriostatic or bacteriolytic, but are preferably bacteriolytic.

Particularly preferred are inocula comprising one or more microorganism(s) which produce the anti-*Melissococcus pluton* and anti*-Paenibacillus larvae* subsp. *larvae* antibiotic(s) found in *Paenibacillus larvae* subsp. *pulvifaciens*, or homologues thereof.

As used herein, the term *homologue* (as applied to an antibiotic) defines an antibiotic which is functionally and/or chemically similar to a reference antibiotic produced by *Paenibacillus larvae* subsp. *pulvifaciens*, but which is produced by a different source organism. Such homologues (and the microorganisms which produce them) may be identified by structural analysis of the reference antibiotic(s) and/or by a screening programme based on detecting activity against *Melissococcus pluton* and/or *Paenibacillus larvae* subsp. *larvae*.

The antibiotic(s) produced by the microorganism(s) for use in the invention may be characterised by an activity profile which includes activity *inter alia* against *Escherichia coli, Salmonella typhimurium, Pseudomonas putida, Pseudomonas aerugenosa, Micrococcus luteus, Bacillus cereus, Bacillus subtilis, Paenibacillus alvei, Paenibacillus larvae* subsp. *larvae, Paenibacillus apiarius, Listeria monocyrogenes, Staphylococcus aureus, Yersinia enterocolitica* and *Melissococcus pluton*.

In preferred embodiments, the microorganism(s) comprise bacteria. Particularly preferred are sporulating bacteria which produce endospores, in which case the inoculum preferably comprises the bacterial endospores (optionally in combination with vegetative cells).

When used as an inoculum, bacterial endospores are preferably provided in the form of washed and/or concentrated spore preparations. Such preparations can be prepared by any of a wide range of known microbiological techniques. Typical methods would include growth of vegetative cells to stationary phase (to induce sporulation) in liquid media followed by separation by centrifugation from the spent media. Such embodiments exploit the highly resistant nature of bacterial endospores, which yields compositions are extremely stable, inexpensive to produce and easily stored.

The bacterial inoculum preferably comprises a *Paenibacillus* spp. or subspecies (as described in Heyndrickx *et alia* (1996), Int. J. Syst. Bacteriol. 46(4), 988-1003).

Particularly preferred is a subspecies of *Paenibacillus larvae,* for example *Paenibacillus larvae* subsp. *pulvifaciens* or an attenuated or avirulent strain of *Paenibacillus larvae* subsp. *larvae*. Other suitable bacteria may be identified by screening natural isolates for hitherto unclassified isolates of *Paenibacillus* spp. which exhibit the required antibiotic activity (but which are not pathogenic).

*Paenibacillus larvae* subsp. *pulvifaciens* produces antibiotics active against pathogenic *Paenibacillus larvae* subsp. *larvae, Paenibacillus alvei* as well as *Melissococcus pluton*, and so this subspecies (or derivatives thereof) may be used as the basis for compositions for the prevention and/or remedial treatment of both European and American foulbrood.

Attenuated or avirulent strains of *Paenibacillus larvae* subsp. *larvae* produce antibiotics active against *Melissococcus pluton* as well as *P. alvei,* and so such strains (or derivatives thereof) may be used as the basis for compositions for the prevention and/or remedial treatment of *inter alia* European foulbrood and diseases mediated by *P. alvei.*

Alternatively, other microorganisms (particularly bacteria) may be genetically engineered to act as hosts to express the antibiotic(s) as defined hereinabove.

The bacteria for use in the invention may bear one or more mutations which alter virulence and/or antibiotic production and/or comprise an attenuated or avirulent strain. This is particularly preferred in embodiments where the inoculum is *Paenibacillus larvae* subsp. *pulvifaciens*, since some strains of this bacterium cause a mild disease known as powdery scale.

Attenuated or avirulent strains may be readily produced by repeated subculturing in laboratory media, by mutagenesis/screening techniques or by targeted mutagenesis of virulence determinants.

The bee disease treated or prevented by the invention is typically a disease mediated by a bacterial infection (for example, a disease mediated by *Paenibacillus larvae* subsp. *larvae, Paenibacillus larvae* subsp. *pulvifaciens, Paenibacillus alvei* or *Melissococcus pluton*).

In particularly preferred embodiments, the bee disease is foulbrood (i.e. American or European foulbrood). Alternatively, or in addition, the disease may be powdery scale.

In another aspect, the invention relates to an attenuated or avirulent strain of *Paenibacillus* (for example, *Paenibacillus larvae*). Particularly preferred are attenuated or avirulent strains of *Paenibacillus larvae* subsp. *pulvifaciens, Paenibacillus larvae* subsp. *larvae* or *Paenibacillus alvei*.

The attenuated or avirulent strains of the invention as described above may be used in the remedial treatment or prophylaxis of an infection in a bee. The strains find particular application as the inoculum is the compositions and methods of the invention described above.

In yet another aspect, the invention relates to the use of an inoculum for the manufacture of medicament for the treatment or prophylaxis of an infection in a bee. In this aspect of the invention, the medicament is preferably a composition according to the invention (e.g. as defined above).

The invention also relates to antibiotic(s) *per se* isolated from the microorganisms described above, and to the use of such antibiotic(s) in the treatment or prophylaxis of the bee diseases discussed above. Such antibiotic preparations may be administered in the same way as the existing antibiotics (also discussed above).

The invention will now be illustrated by reference to the following non-limiting examples.

### EXAMPLE 1

### P. larvae Antibiotic Susceptibilities (Clearing Zones)

Bioassays were carried out to demonstrate the antibiotic action of *Paenibacillus larvae* var. *pulvifaciens* on a variety of microbial species. Tests were carried out according to standard techniques in a petri dish containing a growth medium inoculated with a test microorganism. A disc bearing *Paenibacillus larvae* var. *pulvifaciens* (PLP) was placed at the centre of the petri dish and the extent of growth of the test microorganism measured. The relative sizes of the clearance zones around the discs are recorded in Table 1 below.

**Table 1**

| **Species** | **PLP** |
|---|---|
| *E. coli* E61883/0 (020 H⁻, urine) | + + |
| *E. coli* C600 | ++ |
| *Salmonella typhimurium* ATCC 1131 | + + |
| *Yersinia enterocolitica* NCTC 11176 | + |
| *Pseudomonas aerugenosa* ATCC 9027 | + |
| *Pseudomonas putida* NCTC 109367 | ++ |
| *Paeudomonas putida* UWCC1 | ++ |
| *Bacillus cereus* F462690 | +++ |
| *Bacillus subtilis* 168 | +++ |
| *Paenibacillus alvei* | +++ |
| *Paenibacillus larvae* var. *larvae* | +++ |
| *Paenibacillus larvae* var. *pulvifaciens* | *-* |
| *Listeria monocytogenes* Scott A | +++ |
| *Staphylococcus aureus* CRA410 | +++ |
| *Micrococcus luteus* | + |
| *Saccharomyces cerevisiae* | - |

The results shown in the Table illustrate that *Paenibacillus larvae* var. *pulvifaciens* is effective in killing the pathogenic strain *Paenibacillus larvae* var. *larvae* (PLL) implicated in American Foulbrood (AFB), as well as *Paenibacillus alvei* which is also found in hives infected with foulbrood. The results also demonstrate antibiotic activity against a range of other bacteria, with activity against gram positive bacteria being stronger than activity against gram negative bacteria.

Three strains of PLP were tested and each was found to kill a wide range of PLL strains from such diverse geographical sources as the UK, Slovenia, Australia and New Zealand. None of the PLL strains was found to affect PLP.

The three bee-associated pathogenic *Paenibacilli* all produce antibiotics which to some extent explain their behaviour in bees. Thus, AFB infected material usually presents as a monoculture. In EFB, *M. pluton* is the first organism to present in great clots of cells in the bee-brood gut. After death, conditions apparently favour *P. alvei* and these take over, suppressing *M. pluton* to such an extent that they can be hard to find microscopically in dead brood even though they have been the dominant thick culture during the early part of the disease. In antibiotic terms, tests carried out demonstrate that *P. alvei* kills a wide range of bacteria including *M. pluton* but excluding *P. larvae* (both PLP and PLL). PLL kills *P. alvei, M. pluton* and a whole raft of other test strains but does not affect PLP. PLP kills everything (in a bee-related context) although for all three strains, yeasts (*S. cerevisiae*) and *Micrococccus luteus* are relatively resistant.

### EXAMPLE 2

### Competition Experiments

In order to provide further information about the mechanism of the killing action of PLP on PLL, side by side competition experiments were set up by inoculating a rich medium with PLL and PLP side by side. Both strains tested grew as patches and, after a few days, the PLL started to recede on the side closest to PLP. After a few more days, only a faint rim of growth remained at the side furthest from PLP. Microscopic observation of cells at the recession edge revealed ghosts, protoplasts, and otherwise damaged cells; samples from the lysed part of the PLL patch showed only debris. Thus, the experiments demonstrated that the antibiotic produced by PLP is probably cellulolytic and not bacteriostatic.

### EXAMPLE 3

### The Mechanism of the Killing Action of PLP on PLL and other pathogenic Paenibacilli

We have found that the effects of PLP on PLL (American foulbrood bacterium) are due to a bacteriocin that starts to be made early in the growth phase and continues throughout it. The bacteriocin is quite specific and bacteriolitic for PLL. The large spectrum of bacteria referred to in Table I are not susceptible to this bacteriocin although occasional species such as *B.subtilis* apparently are. We have characterised the bacteriocin as being heat-sensitive (100°C at 2 minutes destroys it) and proteinase K sensitive.

The wide spectrum antibacterial activity appears at the onset of sporulation. It is heat insensitive under the same conditions described above. Without wishing to be bound by any theory, it is believed that such activity is caused by the presence of antibiotic compound(s). Heat-treated antibiotic extract does not inhibit PLL thus it is believed that the bacteriocin alone is responsible for such inhibitory activity in mixtures.

### EXAMPLE 4

### Composition A

### Apicultural compositions

A liquid composition is formed by dispersing an inoculum of PLP spores in a sugar syrup comprising 50% sucrose in water. The composition is used as a feed supplement for the bees and can be disposed at a suitable location in or near a hive.

### Composition B

### Patty composition

A solid tablet or cake (known in apiculture as a patty) is formed by compressing sugar in which has been distributed an inoculum of PLP.

### Composition C

### Dusting composition

A dusting composition is prepared by grinding sugar to a fine powder and mixing into the powder an inoculum of PLP. The dusting can be applied directly to the combs within the hive, or to the interior surfaces of the hive, or may be applied directly to a bee cluster.

### Composition D

### Spray composition

A liquid spray composition is formed by dispersing an inoculum of PLP in water. The composition can be used to spray the hive interior, or the comb, or can be used to spray bee clusters directly.

The foregoing examples are for the purposes of exemplification only, and are not intended to limit the invention in any way.

## Claims

1. A composition for the treatment or prophylaxis of bee disease, the composition comprising:
(a) an inoculum comprising one or more microorganism(s) which produce one or more antibiotic(s), wherein the microorganism(s) comprise bacteria; and
(b) an apicultural delivery vehicle for delivering the inoculum to a hive such that a remedial and/or protective microflora is established therein.

2. The composition of claim 1 wherein the apicultural delivery vehicle is any of:
(a) a patty, preferably a sugar patty; or a sugar and fat extender patty;
(b) a syrup, preferably wherein the syrup comprises sugar and water;
(c) a drench;
(d) a dusting, preferably wherein the dusting comprises sugar,
(e) a paste, preferably wherein the paste is a pollen substitute.

3. A method for the treatment or prophylaxis of bee disease comprising inoculating a hive with the composition of either claim 1 or claim 2 to establish a remedial and/or protective microflora therein.

4. The composition or method of any one of the preceding claims wherein the hive contains a bee colony.

5. The composition or method of any one of the preceding claims wherein the one or more antibiotic(s) are preferably bacteriolytic antibiotics, active against one or more bee pathogen(s); optionally wherein the antibiotic(s) are active against *Melissococcus pluton* and/or *Paenibacillus larvae* subsp. *larvae.*

6. The composition or method of claim 5 wherein the antibiotic(s) are the anti-*Melissococcus pluton* and/or anti-*Paenibacillus larvae* subsp. *larvae* antibiotic(s) found in *Paenibacillus larvae* subsp. *pulvifaciens*, or homologues thereof.

7. The composition or method of claim 5 or claim 6 wherein the antibiotic(s) are active against *Escherichia coli, Salmonella typhimurium, Pseudomonas putida, Pseudomonas aerugenosa, Micrococcus luteus, Bacillus cereus, Bacillus subtilis, Paenibacillus alvei, Paenibacillus larvae subsp. larvae, Paenibacillus apiarius, Listeria monocytogenes, Staphylococcus aureus, Yersinia enterocolitica*, and *Melissococcus pluton.*

8. The composition or method of any one of claims 5 to 7 wherein the microorganism(s) are in the form of bacterial endospores; optionally wherein the bacterial endospores are washed and/or concentrated.

9. The composition or method of claims 1-8, wherein the bacteria comprise a *Paenibacillus* spp.; preferably wherein the *Paenibacillus* spp. is:
(a) a subspecies of *Paenibacillus larvae,* for example *Paenibacillus larvae* subsp. *pulvifaciens* or an attenuated or avirulent strain *of Paenibacillus larvae* subsp. *larvae;* or
(b) *P. alvei*.

10. The composition or method of claims 1-9, wherein the bacteria are genetically engineered to express the antibiotic(s) as defined in any one of claims 5-7.

11. The composition or method of any one of claims 8-10 wherein the bacteria:
(a) bear one or more mutations which alter virulence and/or antibiotic production; or
(b) comprise an attenuated or avirulent strain.

12. The composition or method of any one of the preceding claims wherein the bee disease is mediated by a bacterial infection; preferably wherein the bee disease is mediated by *Paenibacillus larvae* subsp. *larvae, Paenibacillus alvei* or *Melissococcus pluton*.

13. The composition or method of any one of the preceding claims wherein the bee disease is foulbrood; preferably American or European foulbrood; or wherein the disease is powdery scale.

14. Use of an inoculum for the manufacture of medicament for the treatment or prophylaxis of an infection in a bee; wherein the medicament is a composition as defined in any one of claims 1-13, and wherein the inoculum comprises one or more microorganism(s) which produce one or more antibiotic(s), and wherein the microorganism(s) comprise bacteria.

## Patentansprüche

1. Eine Zusammensetzung zur Behandlung bzw. Vorbeugung von Erkrankungen bei Bienen, die sich aus folgenden Bestandteilen zusammensetzt:
(a) ein Impfstoff, der aus einem oder mehreren Mikroorganismen besteht, die einen oder mehrere Antibiotika erzeugen und Bakterien enthalten
(b) einen Apikultur-Wirkstoffträger zum Transport des Impfstoffes in den Bienenstock, so dass eine heilende bzw. schützende Mikroflora aufgebaut werden kann.

2. Die Zusammensetzung des Patentanspruchs 1, wobei es sich um einen der folgenden Apikultur-Wirkstoffträger handelt:
(a) Plätzchen vorzugsweise ein Zuckerplätzchen oder ein Zucker- und Fettstreckmittelplätzchen handelt
(b) einen Sirup, wobei der Sirup vorzugsweise Zucker und Wasser enthalten sollte
(c) einen Trank
(d) ein Pulver, das vorzugsweise Zucker enthält
(e) eine Paste, die vorzugsweise ein Pollenersatz ist

3. Eine Methode zur Behandlung bzw. Vorbeugung von Erkrankungen bei Bienen, die eine Impfung des Bienenstocks entweder mit der Zusammensetzung aus dem Patentanspruch 1 oder der Zusammensetzung aus dem Patentanspruch 2 umfasst, um eine heilende bzw. schützende Mikroflora aufzubauen.

4. Eine Zusammensetzung bzw. Methode aus den vorangegangenen Patentansprüchen, wobei der Bienenstock ein Bienenvolk enthält.

5. Eine Zusammensetzung bzw. Methode aus den vorangegangenen Patentansprüchen, wobei das Antibiotikum bzw. die Antibiotika vorzugsweise bakteriolytische Antibiotika sein sollten, die gegen einen oder mehrere Krankheitserreger bei Bienen wirksam sind, bzw. optional ein Antibiotikum bzw. Antibiotika sein sollten, die gegen *Melissococcus pluton* bzw. *Paenibacillus larvae* subsp. *larvae* wirksam sind.

6. Die Zusammensetzung bzw. Methode des Patentanspruchs 5, wobei das Antibiotikum bzw. die Antibiotika gegen *Melissococcus pluton* bzw. *Paenibacillus larvae* subsp. larvae wirksam ist/sind und in *Paenibacillus larvae* subsp. *pulvifaciens* oder einem Homolog davon vorzufinden ist/sind.

7. Die Zusammensetzung bzw. Methode des Patentanspruchs 5 oder des Patentanspruchs 6, wobei das Antibiotikum bzw. die Antibiotika gegen *Escherichia coli, Salmonella typhimurium, Pseudomonas putida, Pseudomonas aerugenosa, Micrococcus luteus, Bacillus cereus, Bacillus subtilis, Paenibacillus alvei, Paenibacillus larvae* subsp. *larvae, Paenibacillus apiarius, Listeria monocytogenes, Staphylococcus aureus, Yersinia enterocolitica* und *Melissococus pluton* wirksam ist/sind.

8. Die Zusammensetzung bzw. Methode eines der Patentansprüche 5 bis 7, wobei der Mikroorganismus bzw. die Mikroorganismen in Form von bakteriellen Endosporen ist/sind und wobei die bakteriellen Endosporen optional gewaschen bzw. konzentriert sind.

9. Die Zusammensetzung bzw. Methode der Patentansprüche 1-8, wobei die Bakterien eine *Paenibacillusart* umfassen, bei der es sich vorzugsweise um
(a) eine Unterart des *Paenibacillus larvae,* z. B. *Paenibacillus larvae* subsp. *pulvifaciens* oder einen abgeschwächten oder nicht-virulenten Stamm des *Paenibacillus larvae* subsp. *larvae* oder um
(b) *Paenibacillus alvei* handelt.

10. Die Zusammensetzung bzw. Methode der Patentansprüche 1-9, wobei die Bakterien gentechnologisch erzeugt sind, um das Antibiotikum/die Antibiotika zu erzeugen, die in den Patentansprüchen 5-7 aufgeführt sind.

11. Die Zusammensetzung bzw. Methode eines der Patentansprüche 8-10, wobei die Bakterien
(a) eine oder mehrere Mutationen enthalten, die die Virulenz bzw. antibiotische Erzeugung verändern oder
(b) einen abgeschwächten oder nicht-virulenten Stamm enthalten.

12. Die Zusammensetzung bzw. Methode eines der vorangegangenen Patentansprüche, wobei die Erkrankung der Bienen durch eine bakterielle Infektion vermittelt wird, vorzugsweise durch *Paenibacillus larvae* subsp. *larvae, Paenibacillus alvei* oder *Melissococcus pluton*.

13. Die Zusammensetzung bzw. Methode eines der vorangegangenen Patentansprüche, wobei es sich bei der Erkrankung um Faulbrut handelt, vorzugsweise Amerikanische oder Europäische Faulbrut, oder um Powdery Scale Disease handelt.

14. Verwendung eines Impfstoffs für die Herstellung eines Arzneimittels für die Behandlung bzw. Vorbeugung von Infektionen bei Bienen, wobei es sich bei dem Medikament um eine Zusammensetzung wie in den Patentansprüchen 1-13 handelt und wobei der Impfstoff einen oder mehrere Mikroorganismen enthält, die ein oder mehrere Antibiotika erzeugen und Bakterien enthalten.

## Revendications

1. Une composition visant le traitement ou la prophylaxie des maladies des abeilles y compris :
a) un inoculum comprenant un ou plusieurs micro-organismes qui produisent un ou plusieurs antibiotiques, au sein duquel les micro-organismes comprennent les bactéries ;
b) un vecteur apicole pour l'acheminement de l'inoculum vers une ruche afin d'y installer une flore microbienne curative ou protective.

2. La composition de la déclaration 1, dans laquelle le vecteur apicole peut être :
a) une galette, de préférence en sucre ; ou une galette à action prolongée en sucre et en matières grasses ;
b) un sirop, de préférence en sucre et eau ;
c) une potion ;
d) une poudre, de préférence composée de sucre ;
e) une pâte; de préférence un substitut de pollen.

3. Une méthode de traitement ou de prophylaxie de la maladie des abeilles qui comprend l'inoculation d'une ruche avec la composition de la déclaration 1 ou de la déclaration 2 afin de créer une flore microbienne curative et/ou protective.

4. La composition ou la méthode de l'une des déclarations précédentes, la ruche contenant une colonie.

5. La composition ou la méthode de l'une des déclarations précédentes, au sein desquelles le ou les antibiotiques sont de préférence bactériolytiques, actifs contre un ou plusieurs agents pathogènes des abeilles ; et facultativement avec des antibiotiques actifs contre *Melissococcus pluton* et/ou *Paenibacillus larvae* subsp. *larvae.*

6. La composition ou la méthode de la déclaration 5, au sein desquelles le ou les antibiotiques sont en fait anti-*Melissococcus pluton* et/ou *Paenibacillus larvae* subsp. *larvae,* rencontrés au sein de *Paenibacillus larvae* subsp. *pulvifaciens* ou homologues.

7. La composition ou la méthode des déclarations 5 et 6, au sein desquelles le ou les antibiotiques sont actifs contre *Escherichia coli, Salmonella typhimurium, Pseudomonas putida, Pseudomonas aerugenosa, Micrococcus luteus, Bacillus cereus, Bacillus subtilis, Paenibacillus alvei, Paenibacillus larvae* subsp. *larvae, Paenibacillus apiarius, Listeria monocytogenes, Staphylococcus aureus, Yersinia enterocolitica,* et *Melissococcus pluton.*

8. La composition ou la méthode de l'une des déclarations 5 à 7, au sein desquelles le ou les micro-organismes sont des endospores bactériennes ; facultativement, les endospores bactériennes sont lavées et/ou concentrées.

9. La composition ou la méthode des déclarations 1 à 8 dans lesquelles la bactérie comprend un *Paenibacillus* spp., de préférence :
a) une sous-espèce de *Paenibacillus larvae,* par exemple *Paenibacillus larvae* subsp. *pulvifaciens* ou une souche non virulente ou atténuée de *Paenibacillus larvae* subsp. *larvae ;* ou
b) *P. alvei*.

10. La composition ou la méthode des déclarations 1 à 9, au sein desquelles les bactéries sont génétiquement modifiées afin de produire les antibiotiques définis dans l'une des déclarations 5 à 7.

11. La composition ou la méthode des déclarations 8 à 10, au sein desquelles les bactéries :
a) ont été soumises à une ou deux mutations qui altèrent la virulence et/ou la production des antibiotiques ; ou
b) comprennent une souche atténuée ou non virulente.

12. La composition ou la méthode de l'une des déclarations précédentes, au sein desquelles la maladie des abeilles est facilitée par une infection bactérienne, de préférence *Paenibacillus larvae* subsp. *larvae, Paenibacillus alvei* ou *Melissococcus pluton.*

13. La composition ou la méthode de l'une des déclarations précédentes, au sein desquelles la maladie des abeilles est la loque, de préférence la loque américaine ou européenne ; ou encore la « powdery scale ».

14. Utilisation d'un inoculum pour la fabrication du médicament pour le traitement ou la prophylaxie d'une infection chez une abeille, cas dans lequel le médicament est une composition comme il a été défini dans l'une des déclarations 1 à 13 et dans lequel l'inoculum est constitué de un ou plusieurs micro-organismes qui produisent une ou plusieurs bactéries et que le micro-organisme comprend des bactéries.
